# DEMANDE DE BREVET EUROPEEN

(11) **EP 3 032 410 A1**
(43) Date de publication de la demande: **15.06.2016**
(21) Numéro de dépôt: 15197434.2
(22) Date de dépôt: 02.12.2015
(51) Int. Cl.: G06F 9/44

(54) **PROCÉDÉ DE FOURNITURE D'UN SERVICE INFORMATIQUE ET SYSTÈME INFORMATIQUE POUR LA MISE EN OEUVRE DU PROCÉDÉ**

(30) Priorité: 09.12.2014 FR 1462096
(71) Demandeur: BULL SAS, 78340 Les Clayes sous Bois (FR)
(72) Inventeur: MARTINEZ, Patrice, 38100 Grenoble (FR); ZENG EYINDANGA, Landry Stéphane, 38100 Grenoble (FR); CAYUELA, Jacques, 38700 La Tronche (FR)
(74) Mandataire: Fragnaud, Aude

(57) **Abrégé**

L'invention concerne un procédé de fourniture d'un service informatique via un moteur de recherche du réseau internet à un utilisateur ayant fait une demande de service au moyen d'un terminal (TU) et un système de mise en oeuvre. Selon l'invention le procédé comprend les étapes de création de tutoriels exécutables, de recherche par le moteur de recherche (MR) d'au moins un tutoriel (TE) dans un format exécutable correspondant au service demandé, d'exécution automatique du au moins un tutoriel trouvé permettant de fournir le service demandé, et de restitution du résultat obtenu au terminal de l'utilisateur (TU).

L'invention s'applique à l'utilisation d'outils informatiques tels que des logiciels.

## Description

### [Domaine de l'invention]

L'invention concerne un procédé de fourniture d'un service informatique relatif à au moins un programme applicatif. L'invention concerne également un système informatique permettant de mettre en oeuvre le procédé.

Avantageusement, l'invention s'applique l'utilisation d'outils informatiques comme par exemple des logiciels.

Par service informatique, il faut comprendre ici, la mise en oeuvre d'une fonction de traitement de données ou d'une séquence d'actions/commandes, ou l'enchainement d'une ou plusieurs fonctions de traitement de données et d'une ou plusieurs séquences d'actions/commandes ou encore l'enchainement de plusieurs séquences d'actions/commandes, d'un ou plusieurs programme(s) applicatif(s).

Par programme applicatif, on entend un programme pouvant être mis en oeuvre par un ordinateur ou par un processeur d'une machine, il peut s'agir de programmes de type traitement de données et/ou de type pilotage d'une machine ou d'un outil.

Un programme applicatif de type traitement de données comporte des fonctions de traitement de données numériques il peut s'agir de programmes de traitement de texte ou d'image, des programmes de traitement vidéo, ou des programmes de publication d'images ou de vidéo sur des réseaux informatiques comme les réseaux sociaux.

Un programme applicatif de type pilotage met en oeuvre des séquences de commandes pour piloter une machine ou une machine-outil.

Dans la suite, les programmes applicatifs permettent de réaliser des traitements qu'il s'agisse de traitement de données numériques, d'images ou de données audio ou vidéo ou, de mettre en oeuvre des séquences d'actions ou commandes.

Par machine, il faut comprendre un ordinateur ou un serveur ou une machine-outil ou un outil comme par exemple un robot.

Par terminal il faut comprendre un ordinateur ou un téléphone mobile ou une tablette ou tout autre appareil muni de moyens de connexion au réseau internet et d'au moins un processeur apte à mettre en oeuvre des programmes enregistrés ou téléchargés.

### [Problèmes techniques]

A ce jour, lorsqu'un utilisateur désire obtenir un service apte à être mis en oeuvre par un ou plusieurs programmes applicatifs, il rencontre des difficultés et parfois une incapacité selon son niveau de connaissance informatique et le matériel dont il dispose. C'est le cas lorsque l'utilisateur possède un terminal et que ce terminal ne dispose pas du ou des programmes applicatifs permettant d'assurer le service requis ou que l'utilisateur ne sait pas comment obtenir le service requis ou encore qu'il n'a pas les connaissances suffisantes pour trouver et comprendre comment obtenir ledit service à partir du ou des programmes applicatifs aptes à fournir ledit service, à l'utilisateur.

Dans tous les cas, pour obtenir un service informatique, l'utilisateur doit savoir quel programme applicatif est apte à fournir ce service et comment utiliser le programme applicatif pour obtenir le service requis.

### [Art antérieur]

Les solutions connues à ce jour sont, pour un utilisateur, de se connecter sur le réseau internet, d'aller sur des forums ou de faire des recherches à partir d'un moteur de recherche afin de trouver un tutoriel décrivant toutes les actions ou étapes successives à suivre au moyen du terminal et obtenir le service informatique requis. L'utilisateur a aussi la possibilité de s'adresser à un expert pour acquérir le tutoriel puis suivre les étapes successives décrites par le tutoriel pour enfin obtenir le service requis.

Cette solution présente l'inconvénient d'obliger, l'utilisateur à accomplir manuellement les actions suivantes :
- 1. Trouver le ou les tutoriels répondant au(x) besoin(s),
- 2. Rechercher le ou les programmes applicatifs décrits dans le ou les tutoriels,
- 3. télécharger, installer et configurer le ou les programmes décrits dans le (s) tutoriel (s),
- 4. Appliquer les étapes du tutoriel au(x) programme(s) applicatifs.

Toutes ces opérations sont fastidieuses, longues et très souvent difficiles à mettre en oeuvre notamment pour des utilisateurs ne connaissant pas les programmes applicatifs, tels que les outils de bureautique, le programmes de traitement d'images ou de vidéo ou encore les services WEB.

On pourra également se reporter à l'état de la technique constitué par le document US 2002/127531 qui concerne la fourniture de tutoriels à travers le réseau Internet à des utilisateurs. Le tutoriel est transmis au moyen du réseau internet au poste des utilisateurs. Le programme tutoriel comprend des images, du texte, des vidéos pour montrer le fonctionnement d'une machine. Les tutoriels transmis permettent l'apprentissage et l'entrainement des employés à une machine. Il s'agit dans ce document de programmes d'apprentissage.

La présente invention a pour but de remédier à ces inconvénients.

Avec la présente invention, les utilisateurs n'ont plus besoin de connaitre le ou les programmes applicatifs avec lesquels le service peut être obtenu. L'utilisateur obtient directement le résultat d'une demande de service informatique en lieu et place d'un tutoriel le guidant pour obtenir ledit service informatique.

En effet selon la présente invention, l'utilisateur obtient directement le résultat et n'a plus à se préoccuper des étapes fastidieuses d'identification du ou des programmes à utiliser, d'installation et d'apprentissage de l'utilisation du ou desdits programmes.

La présente invention à plus particulièrement pour objet un procédé de fourniture d'un service informatique via un moteur de recherche du réseau internet à un utilisateur ayant fait une demande de service au moyen d'un terminal (TU), ledit terminal étant connecté au réseau internet, principalement caractérisé en ce qu'il comprend :
- a) La recherche, par le moteur de recherche (MR), d'au moins un tutoriel (TE) dans un format exécutable correspondant au service demandé, par association de ladite demande de service à une référence attribuée audit tutoriel exécutable,
- b) l'exécution automatique, par un moteur de pilotage (MP) d'un programme applicatif (PA), du au moins un tutoriel trouvé à l'issue de l'étape a) et permettant de fournir le service demandé,

- c) la restitution d'un résultat obtenu à l'issue d'un traitement informatique opéré par ledit service informatique fourni au terminal de l'utilisateur (TU).

Avantageusement, le procédé comprend une phase préalable A) de création de tutoriels dans un format exécutable et/ou de conversion de tutoriels existant dans un format exécutable.

Selon une autre caractéristique, la phase préalable A) comprend en outre l'enregistrement desdits tutoriels exécutables sur un ou plusieurs serveur(s) connecté(s) au réseau internet.

Selon une autre caractéristique, l'étape b) comprend :
- La mise en oeuvre par le tutoriel exécutable d'étapes successives correspondant à un enchainement automatique de commandes appliquées à un ou plusieurs programme(s) applicatif (s) utilisés pour le service demandé.

Selon une autre caractéristique, les commandes du tutoriel exécutable sont appliquées, au moyen d'un programme de pilotage du programme applicatif. Avantageusement, un programme d'orchestration du service permet d'enchainer plusieurs étapes du tutoriel exécutable ou d'enchainer la mise en oeuvre de plusieurs tutoriels exécutables.

Selon une autre caractéristique, le procédé comprend en outre une étape d'enregistrement d'un catalogue sous forme d'une table de données de références attribuées aux tutoriels au format exécutable permettant l'accès et la sélection du ou des tutoriels exécutables requis pour le service demandé.

Avantageusement, le service informatique comprend un traitement de données sur des données se présentant sous forme d'un fichier texte ou image ou audiovisuel et/ou l'exécution de commandes.

Selon une autre caractéristique, le procédé comprend le téléchargement du au moins un tutoriel exécutable sur le terminal de l'utilisateur et l'exécution automatique par ledit terminal ou, l'exécution automatique du au moins un tutoriel par un serveur connecté au réseau internet sur lequel ledit tutoriel exécutable est enregistré.

Lorsque le tutoriel exécutable est mise en oeuvre par un serveur connecté au réseau internet, le procédé comporte en outre l'étape de :
- transmission par l'utilisateur, via le réseau internet, au dit serveur, des données à traiter sous forme de fichier de données texte ou image ou audiovisuel et la restitution du fichier traité via la connexion au réseau internet.

L'invention a également pour objet un système de fourniture d'un service de traitement informatique pour la mise en oeuvre du procédé selon l'une quelconque des revendications précédentes, principalement caractérisé en ce qu'il comprend :
- Un accès à au moins un tutoriel exécutable au moyen d'un moteur de recherche (MR), à partir d'un terminal utilisateur (TU), ledit moteur de recherche étant apte à associer ladite demande de service à une référence attribuée audit tutoriel exécutable,
- Un ou plusieurs serveur(s) (S3) d'enregistrement de tutoriels exécutables, de référencement et d'enregistrement de programmes applicatifs,
- Au moins un serveur (S4) d'orchestration d'exécution de service comportant un programme de pilotage (MP) appliquant les commandes du ou des tutoriel(s) exécutable(s) (TE) au (x) programme(s) applicatif(s) (PA) correspondant au service demandé,
Les serveurs étant connectés au réseau Internet.

Selon une autre caractéristique, le serveur d'exécution de service comporte en outre un programme d'orchestration pour adresser les commandes du ou des tutoriel(s) exécutable(s) aux différents programmes applicatifs intervenant pour fournir le service.

Avantageusement, le(s) serveur(s) d'orchestration d'exécution de service (S4) est (sont) situé(s) sur le terminal utilisateur (TU) ou sur un serveur informatique distant accessible par le réseau internet (W)

Selon une autre caractéristique, le système comporte en outre un accès par des terminaux d'experts et/ou d'éditeurs de programmes à au moins un serveur de création de tutoriels exécutables comportant un ou plusieurs programmes de développement de tutoriels exécutables.

Selon une autre caractéristique, l'accès à au moins un tutoriel exécutable comporte une application WEB sur un serveur ou guichet dédié permettant d'associer la demande de service à un tutoriel exécutable.

Selon une autre caractéristique, le serveur ou guichet dédié permettant d'associer la demande de service à un tutoriel exécutable comporte une application WEB mettant en oeuvre un mécanisme de recherche sémantique ou un catalogue de tutoriels exécutables disponibles.

D'autres particularités et avantages de l'invention apparaitront à la lecture de la description suivante faite à titre d'exemple illustratif et non limitatif, en référence aux Figures annexées qui représentent :

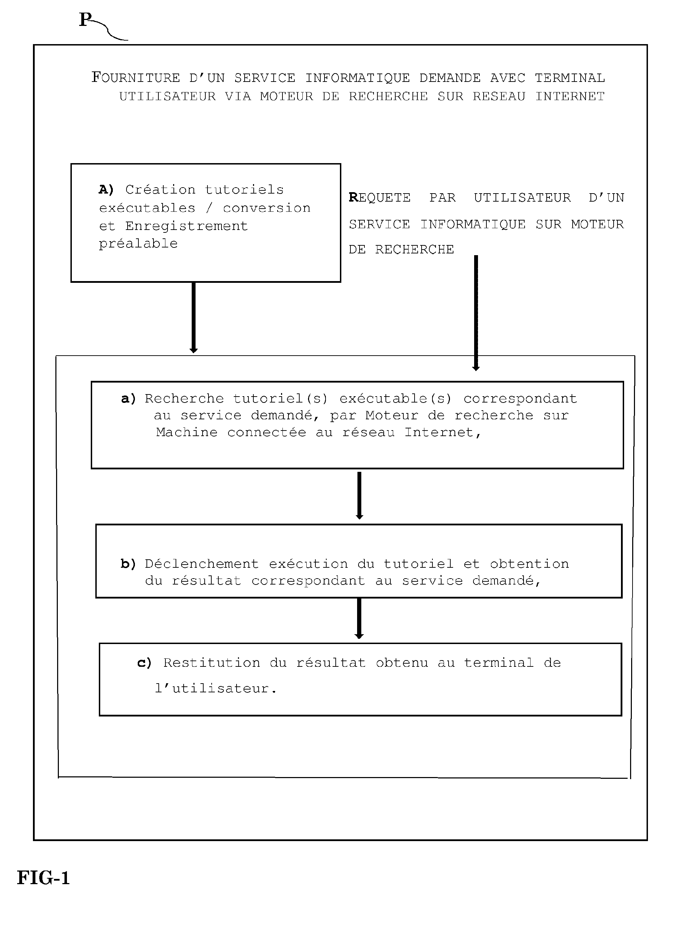

- La figure 1, un schéma des étapes du procédé selon l'invention,
- La figure 2, un schéma d'un système de mise en oeuvre du procédé selon un premier mode de réalisation,
- La figure 3, un schéma d'un système de mise en oeuvre du procédé selon un deuxième mode de réalisation.

### [Description détaillée de l'invention]

Selon la présente invention, la fourniture d'un service informatique, comprend pour un utilisateur, l'accès au moyen d'un moteur de recherche, au service informatique demandé et la fourniture du résultat sans qu'il lui soit nécessaire d'avoir à rechercher et/ou à se procurer le ou les programmes applicatifs nécessaires pour opérer le traitement informatique requis.

A cette fin, le procédé P comprend une phase préalable A) de création de tutoriels dans un format exécutable et/ou de conversion de tutoriels dans un format exécutable c'est-à-dire dans un formant pouvant être mis en oeuvre (exécuté), par un ordinateur ou tout dispositif comprenant un processeur permettant de mettre en oeuvre un programme informatique.

Ainsi, pour service informatique demandé, le tutoriel écrit dans un format exécutable correspondant à ce service, met en oeuvre de façon automatique toutes les actions ou étapes que l'utilisateur aurait dû accomplir pour obtenir ledit service. Par exemple, pour illustrer un service simple consistant à vouloir obtenir l'insertion d'un filigrane sur un document Word, l'utilisateur doit chercher dans les onglets de la page Word, et lorsqu'il a trouvé, il doit cliquer sur « création », puis cliquer sur « filigrane » puis introduire le filigrane choisi. Le tutoriel exécutable créé va mettre en oeuvre de façon automatique l'enchaînement de ces commandes sur le programme applicatif Word

Ensuite, lorsqu'un utilisateur fait sa demande de service informatique au moyen de son terminal sur un moteur de recherche, le procédé P comprend les étapes, a) de recherche par le moteur de recherche du tutoriel dans un format exécutable correspondant au service demandé; b) de déclenchement et d'exécution automatique du tutoriel trouvé permettant de fournir le service demandé; c) de restitution du résultat obtenu au terminal de l'utilisateur.

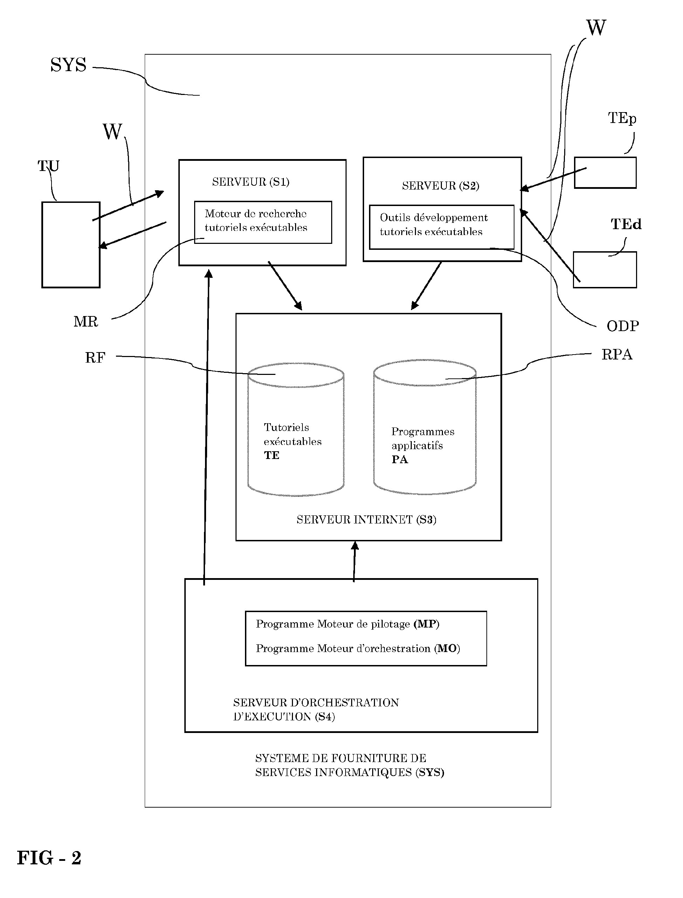

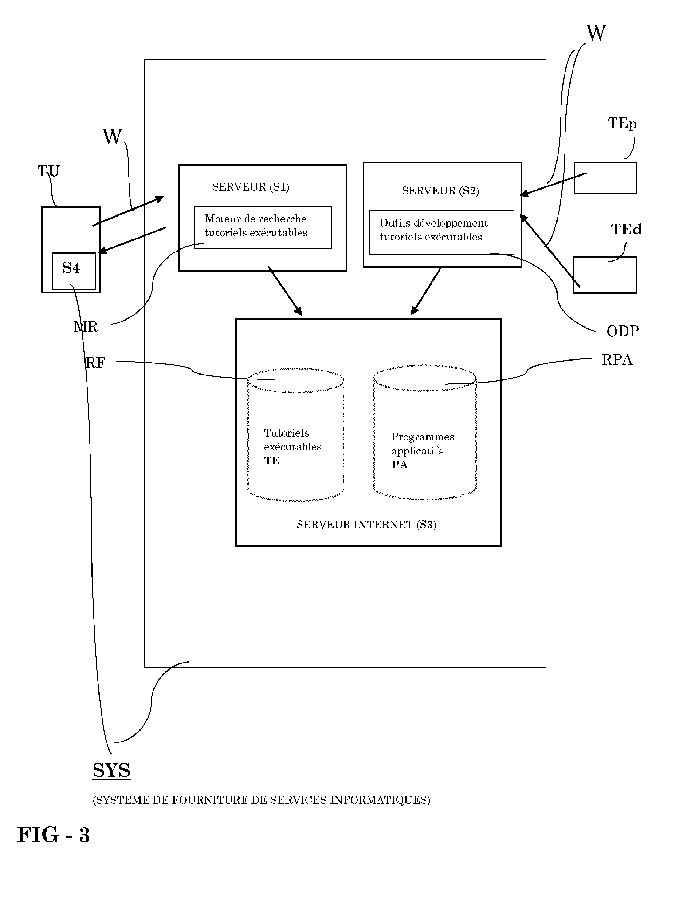

Dans la présente invention des interactions interviennent entre un terminal TU d'un utilisateur, le réseau internet W et le système de fourniture de service informatique SYS illustré sur les figures 2 et 3. Des interactions interviennent également entre des terminaux TEp d'experts, le réseau internet W et le système de fourniture de service informatique SYS. Des interactions ont également lieu entre des terminaux d'éditeurs TEd, le réseau internet W et le système de fourniture de service SYS.

Les serveurs accessibles via le réseau internet sont dénommés dans la suite serveurs internet.

Les tutoriels exécutables sont créés par des experts ou des éditeurs. Les experts ou éditeurs se connectent sur des serveurs internet existants, pour créer des tutoriels exécutables au moyen d'outils existant sur des serveurs internet. Il s'agit d'outils de développement de programmes portant la référence ODP sur les figures 2 et 3. De tels outils sont présents sur lesdits serveurs internet comme illustré sur les figures 2 et 3 par le serveur S2.

Les tutoriels exécutables sont chargés sur des serveurs internet, illustrés par le serveur S3 sur les figures 2 et 3, au fur et à mesure des créations. Avantageusement, les tutoriels exécutables enregistrés, sont référencés sur un catalogue sous forme d'une table de données de références RF, chaque tutoriel exécutable étant ainsi référencé par une donnée « référence ». Cette table permet l'accès rapide et la sélection du ou des tutoriels exécutables requis pour le service demandé.

Des programmes applicatifs PA sont également enregistrés sur les serveurs internet S3 et référencés au moyen d'une table de données de référence RPA permettant également d'avoir des accès rapides au programme applicatif recherché.

L'utilisateur se connecte avec son terminal TU au réseau internet et fait une demande de service sur un moteur de recherche MR. Un serveur internet ou guichet S1 permet d'associer la demande de service de l'utilisateur à un tutoriel exécutable du catalogue RF.

Lors de l'exécution du tutoriel, les commandes du tutoriel exécutable du service requis sont appliquées, au moyen d'un programme de pilotage ou moteur de pilotage MP du programme applicatif PA et au moyen d'un programme d'orchestration ou moteur d'orchestration OP. Le moteur d'orchestration OP intervient lorsque plusieurs tutoriels exécutables doivent être mis en oeuvre. En effet, le moteur d'orchestration est apte à enchainer l'exécution desdits tutoriels exécutables.

Les programmes moteur de pilotage MP et moteur d'orchestration MO sont sur le serveur d'exécution de service S4 illustré sur les figures 2 et 3.

Dans l'exemple de réalisation du système SYS illustré par le schéma de la figure 2, le serveur S4 d'orchestration d'exécution du service est un serveur informatique distant accessible par le terminal TU via le réseau internet W.

Dans l'exemple de réalisation du système SYS illustré par le schéma de la figure 3, le serveur S4 d'orchestration d'exécution de service est un serveur informatique situé dans le terminal utilisateur TU. Cette configuration qui correspond au deuxième mode de réalisation, est utilisée avantageusement pour des terminaux ayant les capacités de traitement et la bande passante suffisante comme par exemple un ordinateur (PC). Cette configuration permet en particulier de télécharger le ou les tutoriels exécutables TE mais également en en cas de besoin, de télécharger le ou les programmes applicatifs PA.

### Exemple de réalisation pratique:

Dans l'exemple donné, le système de fourniture de service correspond à l'exemple de réalisation illustré par la figure 3. Le serveur S4 d'orchestration d'exécution de service est implémenté dans le terminal utilisateur TU

Le service demandé correspond à un traitement sur une photo.

L'utilisateur veut supprimer les yeux rouges d'une photo.

L'utilisateur se connecte sur internet avec son terminal TU. Il fait la demande de service « suppression des yeux rouge » sur le moteur de recherche MR. Le serveur internet ou guichet S1 associe la demande de l'utilisateur au tutoriel exécutable répondant à ce service à partir de la table de référence RF.

Le moteur de recherche trouve le tutoriel exécutable qui permet une mise en oeuvre automatique de ce traitement et, dans cet exemple particulier, le restitue à l'utilisateur, par un chargement sur le terminal TU de l'utilisateur. Le tutoriel peut être exécuté par une instance de l'application de traitement de photo, c'est-à-dire le programme applicatif, « Photoshop » installée sur le serveur S3 de programme applicatif RPA. L'utilisateur clique sur son terminal TU pour sélectionner le tutoriel exécutable. L'écran du terminal TU permet la sélection de la photo, puis le moteur d'orchestration MO du serveur S4 transmet l'exécution du tutoriel au moteur de pilotage MP pour l'exécution automatique qui, par exemple, injecte séquentiellement les commandes au programme applicatif « Photoshop » via le système d'exploitation du terminal TU.

Avantageusement, le résultat est restitué à l'utilisateur à l'adresse électronique indiquée au moyen d'un service d'envoi de mail à disposition du moteur de recherche MR.

Selon un autre exemple, le service demandé peut correspondre à l'enchainement de deux séquences, l'une consiste en un traitement de données comme « la suppression des yeux rouges sur une photo » et l'autre en une commande comme « publier la photo sur un réseau social ».

Cet enchainement peut être prévu dans un tutoriel exécutable ou être obtenu par l'enchainement de deux tutoriels exécutables. Dans le cas où deux tutoriels exécutables sont nécessaires, un tutoriel exécutable va être utilisé pour mettre en oeuvre automatiquement les étapes nécessaires pour obtenir « une photo sans les yeux rouge » et un deuxième tutoriel exécutable va mettre en oeuvre les étapes pour exécuter la commande de publication de la photo traitée sur un réseau social, et ainsi obtenir le résultat final. Le moteur d'orchestration MO pilote alors l'enchaînement des séquences « traitement » et « publication ».

Lorsque le serveur S1 est un guichet dédié c'est-à-dire une application web pour la fourniture de services informatiques, l'utilisateur a la possibilité de formuler sa demande avec des critères prédéterminés tels que :
o Nom(s) souhaité(s) du/des logiciel(s) de traitement d'images : **indifférent**
o Emplacement souhaité du/des logiciels : **indifférent**
o Cout du service : **gratuit**
o Durée d'exécution souhaitée: **indifférent**
o Emplacement de restitution souhaité : **pierre.durand@xmail.fr.**

L'application web comporte à cet effet une interface de dialogue avec l'utilisateur.

La description de l'orchestration de services (moteur d'orchestration MO) est réalisée par un programme écrit dans un langage dédié « DSL : Domain specific language» de description d'un processus d'appels de services. La description du pilotage (moteur de pilotage MP) de programme applicatifs est réalisée par un programme écrit dans un langage dédié «DSL : Domain specific language» de pilotage d'une application. La programmation des moteurs d'orchestration et de pilotage capables d'interpréter ces deux programmes en DSL, relève de connaissances générales pour un informaticien, et ces deux moteurs sont codés en langage informatique classique (langage C ou Java par exemple) pour être mis en oeuvre pour le terminal utilisateur TU ou le serveur S4. Ce codage en langage classique relève également des connaissances générales pour un informaticien.

## Revendications

1. Procédé de fourniture d'un service informatique via un moteur de recherche du réseau internet à un utilisateur ayant fait une demande de service au moyen d'un terminal (TU), ledit terminal étant connecté au réseau internet, **caractérisé en ce qu'**il comprend :
- a) La recherche, par le moteur de recherche (MR), d'au moins un tutoriel (TE) dans un format exécutable correspondant au service demandé, par association de ladite demande de service à une référence attribuée audit tutoriel exécutable,
- b) l'exécution automatique, par un moteur de pilotage (MP) d'un programme applicatif (PA), du au moins un tutoriel trouvé à l'issue de l'étape a) et permettant de fournir le service demandé,
- c) la restitution d'un résultat obtenu à l'issue d'un traitement informatique opéré par ledit service informatique fourni au terminal de l'utilisateur (TU).

2. Procédé de fourniture d'un service informatique selon la revendication 1, **caractérisé en ce qu'**il comprend une phase préalable A) de création de tutoriels dans un format exécutable et/ou de conversion de tutoriels existant dans un format exécutable, ladite phase préalable étant mise en oeuvre par des experts ou des éditeurs au moyen d'outils de développement de tutoriels exécutables.

3. Procédé de fourniture d'un service informatique selon la revendication 2, **caractérisé en ce que** la phase préalable A) comprend en outre l'enregistrement desdits tutoriels exécutables sur un ou plusieurs serveur(s) (S3) connecté(s) au réseau internet.

4. Procédé de fourniture d'un service de traitement informatique, selon l'une quelconque des revendications précédentes, **caractérisé en ce que** l'étape b) comprend :
- La mise en oeuvre par le tutoriel exécutable d'étapes successives correspondant à un enchainement automatique de commandes appliquées à un ou plusieurs programme(s) applicatif(s) utilisés pour le service demandé.

5. Procédé de fourniture d'un service informatique selon la revendication 4, **caractérisé en ce que** les commandes du tutoriel exécutable sont appliquées, au moyen d'un programme de pilotage du programme applicatif et au moyen d'un programme d'orchestration du service pour enchainer plusieurs étapes du tutoriel exécutable ou d'enchainer la mise en oeuvre de plusieurs tutoriels exécutables.

6. Procédé de fourniture d'un service informatique selon l'une quelconque des revendications précédentes, **caractérisé en ce qu'**il comprend en outre une étape d'enregistrement d'un catalogue sous forme d'une table de données de références (RF) attribuées aux tutoriels au format exécutable enregistrés, permettant l'accès et la sélection du ou des tutoriels exécutables requis pour le service demandé.

7. Procédé de fourniture d'un service de traitement informatique, selon l'une quelconque des revendications précédentes, **caractérisé en ce que** le service informatique comprend un traitement de données sur des données se présentant sous forme d'un fichier texte ou image ou audiovisuel et/ou l'exécution de commandes.

8. Procédé de fourniture d'un service de traitement informatique, selon l'une quelconque des revendications **caractérisé en ce qu'**il comprend le téléchargement du au moins un tutoriel exécutable sur le terminal (TU) de l'utilisateur et l'exécution automatique par ledit terminal, ou l'exécution automatique du au moins un tutoriel par un serveur connecté au réseau internet sur lequel ledit tutoriel exécutable est enregistré.

9. Procédé de fourniture d'un service de traitement informatique, selon la revendication 8, caractérisé en ce lorsque le tutoriel exécutable est mise en oeuvre par un serveur connecté au réseau internet, le procédé comporte en outre l'étape de :
- transmission par l'utilisateur, via le réseau internet, au dit serveur, des données à traiter sous forme de fichier de données texte ou image ou audiovisuel et la restitution du fichier traité via la connexion au réseau internet.

10. Système de fourniture d'un service de traitement informatique pour la mise en oeuvre du procédé selon l'une quelconque des revendications précédentes, **caractérisé en ce qu'**il comprend :
- Un accès à au moins un tutoriel exécutable au moyen d'un moteur de recherche (MR), à partir d'un terminal utilisateur (TU), ledit moteur de recherche étant apte à associer ladite demande de service à une référence attribuée audit tutoriel exécutable,
- Un ou plusieurs serveur(s) (S3) d'enregistrement de tutoriels exécutables, de référencement et d'enregistrement de programmes applicatifs,
- Au moins un serveur (S4) d'orchestration d'exécution de service comportant un programme de pilotage (MP) appliquant les commandes du ou des tutoriel(s) exécutable(s) (TE) au (x) programme(s) applicatif(s) (PA) correspondant au service demandé,
Les serveurs étant connectés au réseau Internet.

11. Système de fourniture d'un service de traitement informatique selon la revendication 9, caractérisé en ce le serveur (S4) d'exécution de service comporte en outre un programme d'orchestration pour adresser les commandes du ou des tutoriel(s) exécutable(s) aux différents programmes applicatifs intervenant pour fournir le service.

12. Système de fourniture d'un service de traitement informatique selon la revendication 9, caractérisé en ce le(s) serveur(s) (S4) d'orchestration d'exécution de service est (sont) situé(s) sur le terminal utilisateur (TU) ou sur un serveur informatique distant accessible par le réseau internet (W).

13. Système de fourniture d'un service de traitement informatique selon la revendication 9, **caractérisé en ce qu'**il comporte en outre un accès par des terminaux d'experts et/ou d'éditeurs de programmes à au moins un serveur (S2) de création de tutoriels exécutables comportant un ou plusieurs programmes de développement de tutoriels exécutables.

14. Système de fourniture d'un service de traitement informatique selon l'une quelconque des revendications précédentes, caractérisé en ce l'accès à au moins un tutoriel exécutable comporte une application WEB sur un serveur (S1) ou guichet dédié permettant d'associer la demande de service à un tutoriel exécutable.

15. Système de fourniture d'un service de traitement informatique selon la revendication 12, caractérisé en ce le serveur (S1) ou guichet dédié permettant d'associer la demande de service à un tutoriel exécutable comporte une application WEB mettant en oeuvre un mécanisme de recherche sémantique ou un catalogue de tutoriels exécutables disponibles.
